# EUROPEAN PATENT APPLICATION

(11) **EP 4 535 892 A1**
(43) Date of publication of application: **09.04.2025**
(21) Application number: 22943244.8
(22) Date of filing: 27.05.2022
(51) Int. Cl.: H04W 72/04

(54) **METHOD AND APPARATUS FOR INDICATING TCI STATE, AND DEVICE AND MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Gunzelmann, Rainer
(86) International application number: PCT/CN2022/095768
(87) International publication number: WO 2023/226046

(57) **Abstract**

The present application belongs to the technical field of communications. Disclosed are a method and apparatus for indicating a transmission configuration indicator (TCI) state, and a device and a medium. The method comprises: receiving configuration information wherein the configuration information is used for configuring a first channel to be used for transmission based on N sets of TCI states and configuring a second channel to be used for transmission based on one set of TCI states, N being an integer greater than 1 (301). By means of the method, a TCI state of a terminal is indicated, thereby improving the signal quality of M-TRP transmission based on the TCI state.

## Description

### TECHNICAL FIELD

The present disclosure relates to a field of communication technology, and specifically to a method and an apparatus for indicating a transmission configuration indication (TCI) state, a device and a medium.

### BACKGROUND

In the field of communication technology, in order to reduce a signaling overhead, a unified Transmission Configuration Indicator (unified TCI state) is introduced. For example, if a base station indicates a unified TCI state for downlink, the TCI state can be applied to a Physical Downlink Shared Channel (PDSCH) of a terminal, at least part of a Physical Downlink Control Channel (PDCCH) and some downlink reference signals. If the base station indicates a unified TCI state for uplink, the TCI state can be applied to a Physical Uplink Shared Channel (PUSCH) of a terminal, at least part of a Physical Uplink Control Channel (PUCCH) and some uplink reference signals.

In related art, the unified TCI state may be indicated separately for downlink and uplink, or be indicated jointly for downlink and uplink. That is, if the base station indicates a TCI state for downlink, the TCI state can be applicable to the PDSCH, a part of the PDCCH of a terminal, and some channel state information reference signals (CSI-RSs). If the base station indicates a TCI state for uplink, the TCI state can be applied to the PUSCH of the terminal, a part of the PUCCH, and some sounding reference signals (SRSs). If the base station indicates a joint TCI state, the joint TCI state can be applied to both an uplink channel/reference signal and a downlink channel/reference signal.

However, the related art is only applicable to a single transmission reception point (S-TRP), without considering a multi-transmission reception point (M-TRP).

### SUMMARY

The embodiments of the present disclosure provide a method and an apparatus for indicating a transmission configuration indication (TCI) state, a device and a medium, which can indicate a TCI state when some channels are configured to transmit based on a plurality of sets of TCI states, and some channels are configured to transmit based on one set of TCI states, so as to improve a signal quality of transmission. The technical solution will be described as follows.

According to a first aspect of embodiments of the present disclosure, a method for indicating a TCI state is provided, the method is executed by a terminal, and includes: receiving configuration information, in which the configuration information is configured to configure a first channel for a transmission based on N sets of TCI states and configure a second channel for a transmission based on one set of TCI states, in which N is an integer greater than 1.

According to another aspect of embodiments of the present disclosure, a method for indicating a TCI state is provided, the method is executed by an access network device, and includes: sending configuration information to a terminal, in which the configuration information is configured to configure a first channel for a transmission based on N sets of TCI states and configure a second channel for a transmission based on one set of TCI states, in which N is an integer greater than 1.

According to another aspect of embodiments of the present disclosure, an apparatus for indicating a TCI state is provided, including: a first receiving module, configured to receive configuration information, in which the configuration information is configured to configure a first channel for a transmission based on N sets of TCI states and configure a second channel for a transmission based on one set of TCI states, in which N is an integer greater than 1.

According to another aspect of embodiments of the present disclosure, an apparatus for indicating a TCI state is provided, including: a first sending module, configured to send configuration information to a terminal, in which the configuration information is configured to configure a first channel for a transmission based on N sets of TCI states and configure a second channel for a transmission based on one set of TCI states, in which N is an integer greater than 1.

According to another aspect of embodiments of the present disclosure, a terminal is provided, including: a processor; a transceiver connected to the processor; and a memory used to store executable instructions of the processor, in which the processor is configured to load and execute executable instructions to implement the method for indicating a TCI state according to any one of the above aspects.

According to another aspect of embodiments of the present disclosure, a chip is provided, in which the chip is configured to implement the method for indicating a TCI state according to any one of the above aspects.

According to another aspect of embodiments of the present disclosure, a computer-readable storage medium is provided, having at least one instruction, at least one program, a code set or an instruction set stored thereon, in which the at least one instruction, the at least one program, the code set or the instruction set is loaded and executed by the processor to implement the above method for indicating a TCI state.

The technical solution provided by the embodiment of the disclosure at least has the following beneficial effects: by indicating a TCI state of a terminal when some channels are configured to transmit based on a plurality of sets of TCI states, and some channels are configured to transmit based on one set of TCI states, a signal quality of a multi transmission reception point (M-TRP) transmission based on the TCI state can be improved.

### BRIEF DESCRIPTION OF THE DRAWINGS

In order to clearly illustrate technical solutions of embodiments of the present disclosure, a brief description of drawings used in embodiments is given below. Obviously, the drawings in the following descriptions are only part embodiments of the present disclosure, and for those skilled in the art, other drawings can be obtained according to these drawings without creative labor.
FIG. 1 is a schematic diagram of a communication system according to an embodiment.
FIG. 2 is a schematic diagram of a PDCCH according to an embodiment.
FIG. 3 is a flowchart of a method of indicating a TCI state according to an embodiment.
FIG. 4 is a schematic diagram of a PDCCH according to an embodiment.
FIG. 5 is a flowchart of a method for indicating a TCI state according to an embodiment.
FIG. 6 is a flowchart of a method for indicating a TCI state according to an embodiment.
FIG. 7 is a flowchart of a method for indicating a TCI state according to an embodiment.
FIG. 8 is a block diagram of an apparatus for indicating a TCI state according to an embodiment.
FIG. 9 is a block diagram of an apparatus for indicating a TCI state according to an embodiment.
FIG. 10 is a schematic diagram of a terminal according to an embodiment.
FIG. 11 is a schematic diagram of a network device according to an embodiment.

### DETAILED DESCRIPTION

Reference will now be made in detail to illustrative embodiments, examples of which are illustrated in the accompanying drawings. When the following description refers to the accompanying drawings, the same numbers in different drawings represent the same or similar elements, unless otherwise specified. The implementations set forth in the following illustrative embodiments do not represent all implementations consistent with the present disclosure. Instead, they are merely examples of devices and methods consistent with aspects of the present disclosure as recited in the appended claims.

The terms used in the embodiments of the present disclosure are solely for the purpose of describing a particular embodiment and are not intended to limit the embodiments of the present disclosure. The terms "a" and "the" in the singular form used in the embodiments and claims of the present disclosure are also intended to include the plural form, unless the context clearly indicates other meaning. It should also be understood that the term "and/or" as used herein refers to any or all possible combinations of one or more associated listed items.

It should be understood that although the terms first, second, third, etc. may be used to describe various information in the embodiments of the present disclosure, such information should not be limited to these terms. These terms are used only to distinguish information in the same type from one another. For example, without departing from the scope of the embodiments of the present disclosure, the first information may also be referred to as the second information, and likewise the second information may be referred to as the first information. Depending on the context, the words "if" and "responding to" used here can be interpreted as "when", "while" or "in response to determining".

The network architecture and service scenarios in the embodiments of the present disclosure are intended to clearly explain the technical solution of the embodiments of the present disclosure, and do not constitute a limitation on the technical solution in the embodiments of the present disclosure. Those skilled in the art can understand that, with the evolution of the network architecture and the emergence of new service scenarios, the technical solution in the embodiments of the present disclosure can also solve similar technical problems.

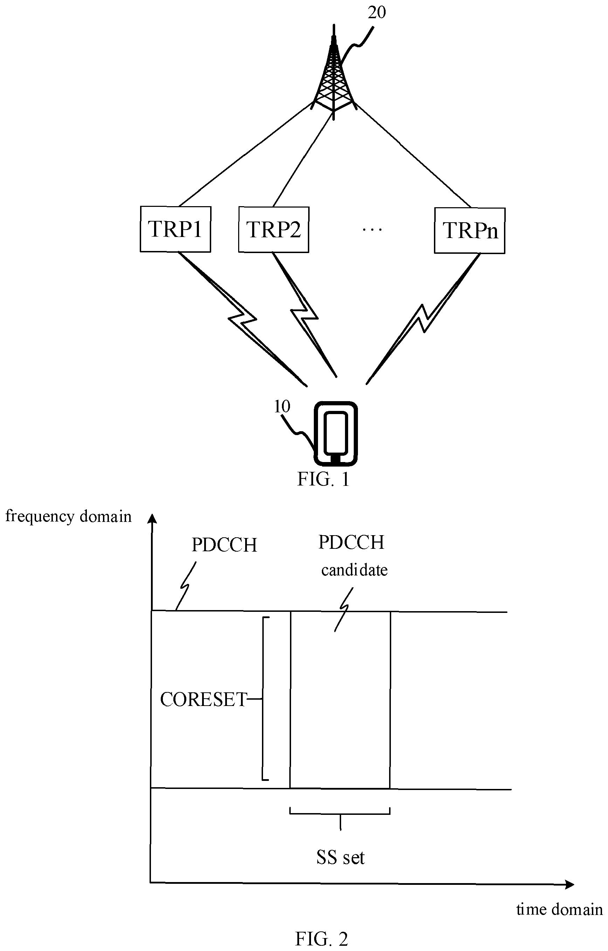

FIG. 1 is a schematic diagram of a communication system according to an embodiment of the disclosure. The communication system includes a terminal 10 and an access network device 20.

There are usually a plurality of terminals 10, and one or more terminals 10 can be distributed in a cell managed by each access network device 20. The terminal 10 may include a variety of handheld devices, vehicle-mounted devices, wearable devices, computing devices with wireless communication function, or other processing devices connected to wireless modems, and various forms of user equipment (UE), mobile stations (MS), etc. For a convenient description, the devices mentioned above in the embodiments of the disclosure are collectively referred to as terminal.

The access network device 20 is an apparatus deployed in an access network that provides a wireless communication function for the terminal 10. The access network device 20 may include various forms of macro base stations, micro base stations, relay stations, access points. In systems adopting different wireless access technologies, a name of the device that has the function of the access network device may be different, such as gNodeB or gNB in the 5G NR system. As the communication technology evolves, the name "access network equipment" may change. For a convenient description, in the embodiments of the disclosure, the above apparatuses that provide the wireless communication function for the terminal 10 are collectively referred to as access network device. A connection can be established between the access network device 20 and the terminal 10 via an air interface for communication, including a signaling interaction and a data interaction. There can be a plurality of access network devices 20, and two adjacent access network devices 20 can also communicate with each other in a wired or wireless manner. The terminal 10 can switch between different access network device 20, that is, establishing a connection with different access network device 20.

Optionally, at least two transmission reception point (TRP) are set on the access network device 20. A communication connection is established between the terminal 10 and the at least two TRPs by a receiving TCI state and/or a sending TCI state. Optionally, different TRPs use different receiving TCI states and/or sending TCI states. For example, the terminal 10 determines the receiving TCI state required to receive the physical downlink control channel (PDCCH) based on a joint TCI state or a downlink TCI state; and the terminal 10 determines the sending TCI state required to send the PUSCH based on a joint TCI state or an uplink TCI state.

"5G NR System" in the embodiments of the disclosure may also be referred to as a 5G system or an NR system, which can be understood by those skilled in the art. The technical solution in the embodiments of the disclosure can be applied to the 5G NR system or a subsequent evolution system of the 5G NR system.

In the New Radio (NR) technology, especially when the communication frequency band is in the frequency range 2, since the high-frequency channel decays in a fast speed, it is required to use a beam-based transmission and reception to ensure the coverage.

For example, as illustrated in FIG. 2, take the PDCCH as an example. The PDCCH includes at least one PDCCH candidate. Here, take one PDCCH candidate as an example. The PDCCH candidate belongs to a search space (SS) set. The SS set is used to describe a time domain position of a PDCCH search, and the SS set is associated with a control resource set (CORESET). The CORESET is used to describe a frequency domain characteristic of the PDCCH and the number of symbols occupied in the time domain of the PDCCH. Therefore, the above briefly describes the association between the PDCCH candidates the SS set, and the CORESET in the PDCCH.

In order to reduce a signaling overhead, a unified TCI state is desired to be used. If the base station indicates a unified TCI state for downlink, the TCI state can be applied to a physical downlink shared channel (PDSCH), at least part of the PDCCH (such as a user equipment dedicated PDCCH) and some downlink reference signals of the terminal. If the base station indicates a unified TCI state for uplink, the TCI state can be applied to the PUSCH, at least part of a physical uplink control channel (PUCCH), and some uplink reference signals of the terminal. The unified TCI state may be currently indicated separately with a separate uplink TCI state and a separate downlink TCI state, or be indicated jointly with an uplink and downlink joint TCI state. The separate uplink TCI state is applicable to an uplink channel/reference signal, and the separate downlink TCI state is applicable to a downlink channel/reference signal. The joint TCI state is applicable to both the uplink channel/reference signal and the downlink channel/reference signal.

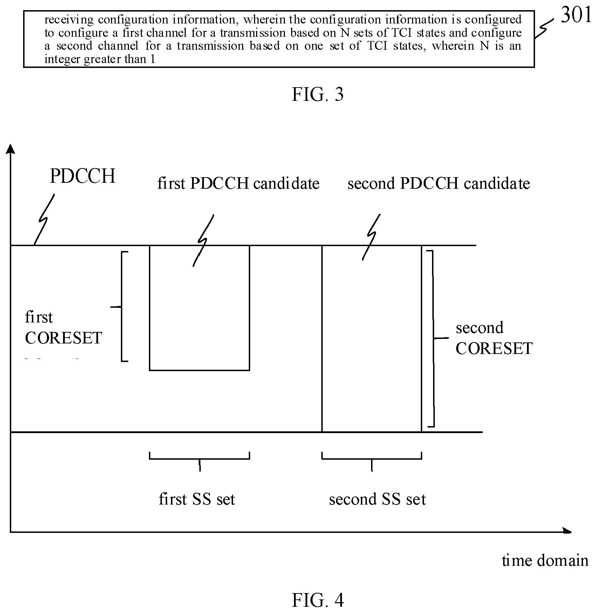

FIG. 3 is a flowchart of a method of indicating a TCI state according to an embodiment of the disclosure. The method can be applied to a terminal in the communication system illustrated in FIG. 1, and includes the following steps.

At step 301, configuration information is received, in which the configuration information is configured to configure a first channel for a transmission based on N sets of TCI states and configure a second channel for a transmission based on one set of TCI states, in which N is an integer greater than 1.

The TCI state is configured to inform the terminal to receive the PDCCH/PDSCH by using the same quasi co-location (QCL) information or spatial Rx parameter as receiving which reference signal (a synchronization signal block (SSB) or a channel state information reference signal (CSI-RS)) sent by the base station; or, inform the terminal to send the PUCCH/PUSCH by using the same QCL information or spatial relation information or spatial filter as sending which reference signal (such as a sounding reference signal (SRS) or a CSI-RS).

The first channel includes at least one of a PDCCH, a PDSCH, a PUCCH, or a PUSCH.

The second channel includes at least one of a PDCCH, a PDSCH, a PUCCH, or a PUSCH.

The first channel and the second channel may be the same channel or different channels. For example, the first channel is a PDCCH and the second channel is a PDSCH or a PUCCH or a PUSCH. For another example, the first channel and the second channel are both the PDCCH, or, the first channel and the second channel are both the PDSCH.

For example, the first channel and the second channel are both the PDCCH, but the CORESET corresponding to the first channel is different from the CORESET corresponding to the second channel, or, the SS set corresponding to the first channel is different from the SS set corresponding to the second channel. There can be one or more CORESETs corresponding to the first channel or the second channel, and there can be one or more SS sets corresponding to the first channel or the second channel.

For example, the first channel and second channel are both the PUSCH, while configuration of the first channel is a dynamic grant and configuration of the second channel is a configured grant Type 1 (that is, a radio resource control (RRC) configuration) or a configured grant Type 2 (that is, a RRC configuration + a downlink control information (DCI) indication).

For example, the first channel and the second channel are both the PUCCH, and the first channel is configured with a plurality of sets of TCI states, in which the plurality of sets of TCI states correspond to a multi transmission reception point (M-TRP) transmission; the second channel is configured with one set of TCI states, in which the one set of TCI states corresponds to an S-TRP transmission.

For example, the first channel and the second channel are both the PDSCH, and the DCI corresponding to the first channel belongs to a first CORESET and a first SS set. The DCI corresponding to the second channel belongs to a second CORESET and a second SS set. The first CORESET and the second CORESET can be the same or different, and the first SS set and the second SS set can be the same or different.

The first channel is configured for a transmission based on N sets of TCI states in at least one transmission. That is, not every transmission in the first channel is the transmission based on a plurality of TCI states, as long as there is one transmission based on N sets of TCI states.

A single set of TCI states includes a joint TCI state, and the joint TCI state is a TCI state applicable to both a transmission of an uplink channel/reference signal and a transmission of a downlink channel/reference signal; or a single set of TCI states includes at least one of an uplink TCI state or a downlink TCI state. The uplink TCI state indicates the transmission of an uplink channel/reference signal, and the downlink TCI states indicates the transmission of a downlink channel/reference signal.

For example, as illustrated in FIG. 4, take the PDCCH as an example. The PDCCH includes two PDCCH candidates, namely, a first PDCCH candidate and a second PDCCH candidate. The first PDCCH candidate belongs to a first SS set, and the first SS set is associated with a first CORESET. The second PDCCH candidate belongs to a second SS set, and the second SS set is associated with a second CORESET. The first CORESET is configured with a first TCI state, and the second CORESET is configured with a second TCI state. The first PDCCH candidate corresponds to a first TRP, and the second PDCCH candidate corresponds to a second TRP. Therefore, the access network device can configure a plurality of sets of TCI states supported by the terminal to the terminal for the reception of the PDCCH.

It should be noted that time domain resources of the first PDCCH candidate and the second PDCCH candidate are the same; or frequency domain resources of the first PDCCH candidate and the second PDCCH candidate are the same; or time domain resources of the first PDCCH candidate and the second PDCCH candidate are the same, and frequency domain resources of the first PDCCH candidate and the second PDCCH candidate are the same.

When the first channel is the PDCCH, the first channel can be configured with the following transmission methods.
(1) PDCCH repetition method. The reception of one PDCCH includes n PDCCH candidates, in which the n PDCCH candidates have a one-to-one correspondence with n SS sets, and the n SS sets have a link relationship, in which N is a positive integer greater than 1. Optionally, the n SS sets can be the same or different. Each SS set is associated with a respective CORESET. Optionally, n CORESETs can be the same or different.
(2) SFN (single frequency network) method. The CORESET corresponding to the PDCCH is configured with at least two TCI states, in which each TCI state includes a joint TCI state or a downlink TCI state.

When the first channel is the PUCCH, the first channel can be configured with the following transmission methods.
(1) FDM (frequency division multiplexing) method. Frequency domain resources of n PUCCH occasions configured to transmit the PUCCH are different, in which TCI states of the n PUSCH occasions are different.
   Optionally, time domain resources of the n PUCCH occasions configured to transmit the PUCCH are the same.
(2) TDM (time division multiplexing) method. Time domain resources of n PUCCH occasions configured to transmit the PUCCH are different, in which TCI states of the n PUCCH occasions are different.
   Optionally, frequency domain resources of the n PUCCH occasions configured to transmit the PUCCH are the same.
(3) SDM (space division multiplexing) method. Demodulation reference signal (DMRS) ports configured to transmit the PUCCH correspond to at least two code division multiplexing (CDM) groups, in which the at least two CDM groups correspond to different TCI states.
   Optionally, time domain resources of the PUCCH corresponding to the two CDM groups configured to transmit the PUCCH are the same, and frequency domain resources of the PUCCH corresponding to the two CDM groups configured to transmit the PUCCH are the same.
(4) SFN method. TCI states configured to transmit the PUCCH include at least two TCI states, in which each TCI state includes a joint TCI state or an uplink TCI state. Optionally, time domain resources configured to transmit the PUCCH are the same, frequency domain resources configured to transmit the PUCCH are the same, and DMRS ports configured to transmit the demodulation reference signal of the PUCCH are the same.

When the first channel is the PDSCH, the first channel can be configured with the following transmission methods.
(1) FDM method. Frequency domain resources of n PDSCH occasions configured to transmit the PDSCH are different, in which TCI states of the n PDSCH occasions are different.
   Optionally, time domain resources of the n PDSCH occasions configured to transmit the PDSCH are the same.
(2) TDM method. Time domain resources of n PDSCH occasions configured to transmit the PDSCH are different, in which TCI states of the n PDSCH occasions are different.
   Optionally, frequency domain resources of the n PDSCH occasions configured to transmit the PDSCH are the same.
(3) SDM method. DMRS ports configured to transmit the PDSCH correspond to at least two CDM groups, in which the at least two CDM groups correspond to different TCI states.
   Optionally, time domain resources of the PDSCH corresponding to the two CDM groups configured to transmit the PDSCH are the same, and frequency domain resources of the PDSCH corresponding to the two CDM groups configured to transmit the PDSCH are the same.
(4) SFN method. TCI states configured to transmit the PDSCH include at least two TCI states, in which each TCI state includes a joint TCI state or a downlink TCI state. Optionally, time domain resources configured to transmit the PDSCH are the same, frequency domain resources configured to transmit the PDSCH are the same, and DMRS ports configured to transmit the demodulation reference signal of the PDSCH are the same.

When the first channel is the PUSCH, the first channel can be configured with the following transmission methods.
(1) FDM method. Frequency domain resources of n PUSCH occasions configured to transmit the PUSCH are different, in which TCI states of the n PUSCH occasions are different.
   Optionally, time domain resources of the n PUSCH occasions configured to transmit the PUSCH are the same.
(2) TDM method. Time domain resources of n PUSCH occasions configured to transmit the PUSCH are different, in which TCI states of the n PUSCH occasions are different.
   Optionally, frequency domain resources of the n PUSCH occasions configured to transmit the PUSCH are the same.
(3) SDM method. DMRS ports configured to transmit the PUSCH correspond to at least two CDM groups, in which the at least two CDM groups correspond to different TCI states.
   Optionally, time domain resources of the PUSCH corresponding to the two CDM groups configured to transmit the PUSCH are the same, and frequency domain resources of the PUSCH corresponding to the two CDM groups configured to transmit the PUSCH are the same.
(4) SFN method. TCI state configured to transmit the PUSCH include at least two TCI states, in which each TCI state includes a joint TCI state or an uplink TCI state. Optionally, time domain resources configured to transmit the PUSCH are the same, frequency domain resources configured to transmit the PUSCH are the same, and DMRS ports configured to transmit the demodulation reference signal of the PUSCH are the same.

In summary, the TCI state of the terminal is indicated when some channels are configured to transmit based on a plurality of sets of TCI states and some channels are configured to transmit based on one set of TCI states, so as to improve a signal quality of an M-TRP transmission based on the TCI state.

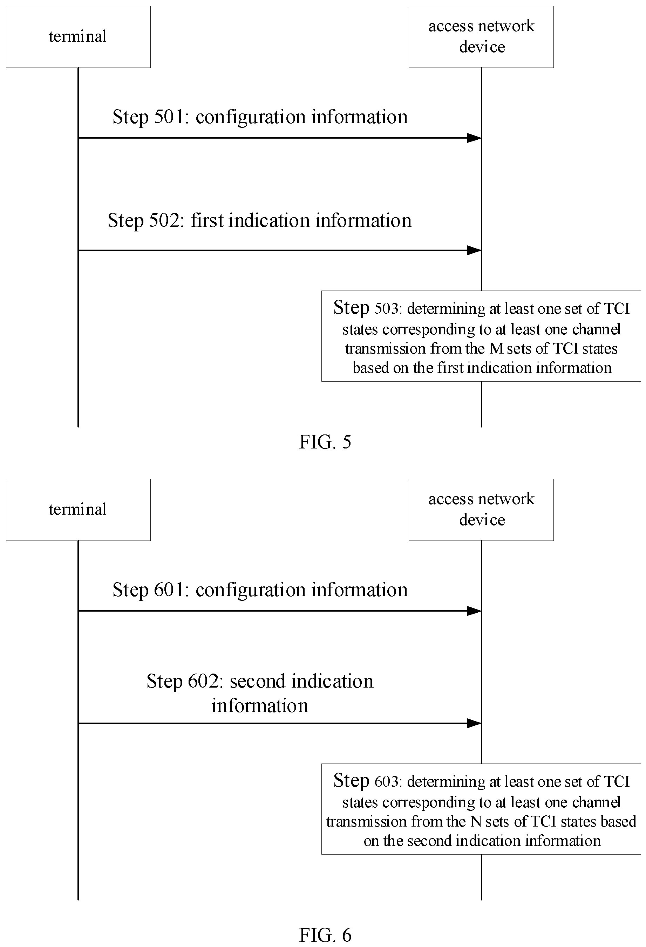

FIG. 5 is a flowchart of a method for indicating a TCI state according to an embodiment of the disclosure. The method can be applied to a terminal in the communication system illustrated in FIG. 1, and includes the following steps.

At step 501, a terminal receives configuration information.

The configuration information is configured to configure a first channel for a transmission based on N sets of TCI states and configure a second channel for a transmission based on one set of TCI states, in which N is an integer greater than 1, such as N=2, 3, 4, etc.

The TCI state is configured to inform the terminal to receive the PDCCH/PDSCH by using the same quasi co-location (QCL) information or spatial Rx parameter as receiving which reference signal or a channel state information reference signal sent by the base station; or, inform the terminal to send the PUCCH/PUSCH by using the same QCL information or spatial relation information or spatial filter as sending or receiving which reference signal.

The first channel includes at least one of a PDCCH, a PDSCH, a PUCCH, or a PUSCH.

The second channel includes at least one of a PDCCH, a PDSCH, a PUCCH, or a PUSCH.

The first channel and the second channel may be the same channel or different channels.

The first channel is configured for a transmission based on N sets of TCI states in at least one transmission. That is, not every transmission in the first channel is the transmission based on a plurality of TCI states, as long as there is one transmission based on N sets of TCI states.

A single set of TCI states includes a joint TCI state, and the joint TCI state is configured to indicate an uplink channel/reference signal and a downlink channel/reference signal; or a single set of TCI states includes at least one of an uplink TCI state or a downlink TCI state. The uplink TCI state indicates an uplink channel/reference signal, and the downlink TCI states indicates a downlink channel/reference signal.

At step 502, the terminal receives first indication information.

The first indication information indicates M sets of TCI states, in which M is a positive integer not greater than N. In this case, the number of TCI states indicated by the first indication information can be 1 to N.

Optionally, the first indication information includes a first medium access control control unit (MAC CE). For example, the MAC CE activates M sets of TCI states corresponding to a codepoint in a TCI field in DCI.

Optionally, the first indication information includes a second MAC CE and a first DCI. For example, the MAC CE activates M sets of TCI states corresponding to each of a plurality of codepoints in a TCI field in DCI, and the TCI field of the DCI indicates one of the codepoints.

Optionally, at least one set of TCI states in the M sets of TCI states includes at least one of an uplink TCI state or a downlink TCI state in a case that the first channel is a downlink channel and the second channel is an uplink channel or the first channel is an uplink channel and the second channel is a downlink channel. The at least one set of TCI states cannot be a joint TCI state.

At step 503, the terminal determines at least one set of TCI states corresponding to at least one channel transmission from the M sets of TCI states based on the first indication information.

Optionally, channels corresponding to the at least one channel transmission include the first channel and the second channel. For example, if the at least one channel transmission includes the PDCCH, the first channel and the second channel are both the PDCCH. If the at least one channel transmission includes the PDCCH and the PUCCH, the first channel is the PDCCH and the second channel is the PUCCH, or the first channel is the PUCCH and the second channel is the PDCCH, or the first channel is the PUCCH, and the second channel has two parts, one part is the PUCCH and the other part is the PDCCH.

Optionally, the one set of TCI states includes a joint TCI state or the one set of TCI states includes a downlink TCI state or includes a downlink TCI state and an uplink TCI state, in a case that the first channel is the PDCCH and M is equal to one.

Optionally, at least one of a first PDCCH candidate or a second PDCCH candidate contained in the PDCCH is monitored based on the joint TCI state in the one set of TCI states; or at least one of the first PDCCH candidate or the second PDCCH candidate contained in the PDCCH is monitored based on the downlink TCI state in the one set of TCI states. The first PDCCH candidate corresponds to a first SS set, the second PDCCH candidate corresponds to a second SS set, and the first SS set and the second SS set are SS sets with a link relationship. The first SS set is associated with a first CORESET, and the second SS set is associated with a second CORESET. The first CORESET and the second CORESET can be the same or different.

For example, one PDCCH candidate of the first PDCCH candidate and the second PDCCH candidate contained in the PDCCH monitored based on the joint TCI state in the one set of TCI states is configured as a target PDCCH candidate, such as the first PDCCH candidate. That is, the PDCCH on the first PDCCH candidate is received using the one set of TCI states, and the PDCCH on the second PDCCH candidate does not need to be monitored and received. The way that the terminal determines the target PDCCH candidate corresponding to the one set of TCI states includes the following methods.

First one, the base station informs the terminal of a correspondence between PDCCH candidates and TCI states.

Optionally, the terminal receives second configuration information, in which the second configuration information indicates a correspondence between each TCI state and the target PDCCH candidate.

**For** example, the base station configures an SS set group corresponding to an SS set, or the base station configures a CORESETPoolIndex, a CORESET group, or a channel group corresponding to a CORESET. The base station further indicates an SS set group or a CORESETPoolIndex or a CORESET group or a channel group corresponding to each TCI state, then the correspondence between PDCCH candidates and TCI states can be determined according to the correspondence between the configuration of the base station and the information indicated by the base station. The above configuration can be configured by at least one of an RRC, a MAC CE, or DCI. The above indication can be indicated by at least one of an RRC, a MAC CE, or DCI.

Second one, the target PDCCH candidate can be determined according to a default mapping rule.

Optionally, the terminal determines the target PDCCH candidate corresponding to one set of TCI states from at least two PDCCH candidates based on the default mapping relationship. The way to determine the target PDCCH candidate according to the default mapping rule includes at least one of the following methods.
1) The target PDCCH candidate is the PDCCH candidate corresponding to a smallest or smaller CORESET identity document (ID) in N PDCCH candidates. That is, the target PDCCH candidate is the PDCCH candidate corresponding to the smallest or smaller CORESET ID in the N PDCCH candidates.
2) The target PDCCH candidate is a PDCCH candidate corresponding to a smallest or smaller SS set ID in N PDCCH candidates. That is, the target PDCCH candidate is the PDCCH candidate corresponding to a smallest or smaller SS set ID in the N PDCCH candidates.
3) The target PDCCH candidate is a PDCCH candidate corresponding to a CORESET with a smallest or smaller CORESETPoolIndex in N PDCCH candidates.
4) The target PDCCH candidate is a PDCCH candidate corresponding to a CORESET with a smallest or smaller CORESET group ID in N PDCCH candidates.

It should be noted that the above methods of determining the target PDCCH candidate are just explanatory, which are not limited in the embodiments of the disclosure.

For example, the first PDCCH candidate and the second PDCCH candidate contained in the PDCCH are monitored based on the joint TCI state in one set of TCI states. That is, the one set of TCI states is used to receive PDCCHs on the first PDCCH candidate and the second PDCCH candidate.

In summary, the TCI state of the terminal is indicated when some channels are configured to transmit based on a plurality of sets of TCI states, and some channels are configured to transmit based on one set of TCI states, so as to improve a signal quality of an M-TRP transmission based on the TCI state.

FIG. 6 is a flowchart of a method for indicating a TCI state according to an embodiment of the disclosure. The method can be applied to a terminal in the communication system illustrated in FIG. 1, and includes the following steps.

At step 601, a terminal receives configuration information.

The configuration information is configured to configure a first channel for a transmission based on N sets of TCI states and configure a second channel for a transmission based on one set of TCI states, in which N is an integer greater than 1.

The TCI state is configured to inform the terminal to receive the PDCCH/PDSCH by using the same quasi co-location (QCL) information or spatial Rx parameter as receiving which reference signal sent by the base station; or, inform the terminal to send the PUCCH/PUSCH by using the same QCL information or spatial relation information or spatial filter as sending which reference signal.

The first channel includes at least one of a PDCCH, a PDSCH, a PUCCH, or a PUSCH.

The second channel includes at least one of a PDCCH, a PDSCH, a PUCCH, or a PUSCH.

The first channel and the second channel may be the same channel or different channels.

The first channel is configured for a transmission based on N sets of TCI states in at least one transmission. That is, not every transmission in the first channel is the transmission based on a plurality of TCI states, as long as there is one transmission based on N sets of TCI states.

A single set of TCI states includes a joint TCI state, and the joint TCI state is a TCI state applicable to both an uplink channel/reference signal and a downlink channel/reference signal; or a single set of TCI states includes at least one of an uplink TCI state or a downlink TCI state. The uplink TCI state is applicable to an uplink channel/reference signal, and the downlink TCI states is applicable to a downlink channel/reference signal.

At step 602, the terminal receives second indication information.

The second indication information indicates N sets of TCI states.

Optionally, the second indication information includes a third MAC CE. For example, the MAC CE activates N sets of TCI states corresponding to a codepoint in a TCI field in DCI.

Optionally, the second indication information includes a fourth MAC CE and a second DCI. For example, the MAC CE activates N sets of TCI states corresponding to each of a plurality of codepoints in a TCI field in DCI, and the TCI field of the DCI indicates one of the codepoints.

At step 603, the terminal determines at least one set of TCI states corresponding to at least one channel transmission from the N sets of TCI states based on the second indication information.

Optionally, channels corresponding to the at least one channel transmission include the first channel and the second channel. For example, if the at least one channel transmission includes the PDCCH, the first channel and the second channel are both the PDCCH. If the at least one channel transmission includes the PDCCH and the PUCCH, the first channel is the PDCCH and the second channel is the PUCCH, or the first channel is the PUCCH and the second channel is the PDCCH, or the first channel is the PUCCH, and the second channel has two parts, one part is the PUCCH and the other part is the PDCCH.

Optionally, a correspondence between N sets of TCI states and N PDCCH candidates is determined if the first channel is the PDCCH. The way to determine a correspondence between the N sets of TCI states and the N PDCCH candidates can refer to the following method: receiving third indication information of the base station, in which the third indication information is configured to indicate that L sets of the N sets of TCI states indicated by the second indication information are configured to receive the PDCCH, in which L is a positive integer not greater than N. That is, the third indication information can further indicate that some or all of TCI states in the N sets of TCI states are configured to receive the PDCCH. The third indication information contains at least one of an RRC, a MAC CE, and DCI. After determining that L sets of TCI states can be configured to receive the PDCCH, the correspondence between the L sets of TCI states and the N PDCCH candidates is further determined. If L=N, the correspondence between TCI states and PDCCH candidates is determined based on at least one of the following methods.

First one, the base station informs the terminal of a correspondence between PDCCH candidates and TCI states.

Optionally, the terminal receives third configuration information, in which the third configuration information indicates a correspondence between each TCI state and the target PDCCH candidate.

For example, the base station configures an SS set group corresponding to an SS set, or the base station configures a CORESETPoolIndex, a CORESET group, or a channel group corresponding to a CORESET. The base station further indicates an SS set group or a CORESETPoolIndex or a CORESET group or a channel group corresponding to each TCI state, then the correspondence between PDCCH candidates and TCI states can be determined according to the correspondence between the configuration of the base station and the information indicated by the base station. The above configuration can be configured by at least one of an RRC, a MAC CE, or DCI. The above indication can be indicated by at least one of an RRC, a MAC CE, or DCI.

Second one, a correspondence between PDCCH candidates and TCI states can be determined according to a default mapping rule.

Optionally, the terminal determines the correspondence between PDCCH candidates and TCI states based on a default mapping relationship. The default mapping relationship can be stored in the terminal in advance, or configured by the access network device to the terminal in advance, or obtained by the terminal according to the third indication information. The way to determine the correspondence between PDCCH candidates and TCI states according to the default mapping rule includes at least one of the following methods.
1) The PDCCH candidate corresponding to a smallest CORESET ID in PDCCH candidates corresponds to a first set of TCI states, in which the first set of TCI state is a TCI state with a smallest TCI state ID, or a TCI state in a lower bit position of a MAC CE configured to activate a plurality of sets of TCI states corresponding to a codepoint. The others correspond in order.
2) The PDCCH candidate corresponding to a smallest SS set ID in PDCCH candidates corresponds to a first set of TCI states, in which the first set of TCI states is a TCI state with a smallest TCI state ID, or a TCI state in a lower bit position of a MAC CE configured to activate a plurality of sets of TCI states corresponding to a codepoint. The others correspond in sequence.
3) The PDCCH candidate corresponding to a CORESET with a smallest CORESETPoolIndex in PDCCH candidates corresponds to a first set of TCI states, in which the first set of TCI states is a TCI state with a smallest TCI state ID, or a TCI state in a lower bit position of an MAC CE configured to activate a plurality of sets of TCI states corresponding to a codepoint. The others correspond in sequence.
4) The PDCCH candidate corresponding to a CORESET with a smallest CORESET group ID in PDCCH candidates corresponds to a first set of TCI states, in which the first set of TCI states is a TCI state with a smallest TCI state ID, or a TCI state in a lower bit position of an MAC CE configured to activate a plurality of sets of TCI states corresponding to a codepoint. The others correspond in sequence.

If L=1, one method is to apply a set of TCI states to all PDCCH candidates. The other is to apply a set of TCI states to a target PDCCH candidate in the N PDCCH candidates, in which the target PDCCH candidate can also be determined according to the above configuration of the base station or the default mapping rule.

Optionally, in a case that the second channel is the PDCCH, that is, L=1, and the PDCCH reception contains only one PDCCH candidate, the above method for the case that the first channel is the PDCCH can also be used to indicate which set of TCI states in the N sets of TCI states is configured to receive the second channel, which is not elaborated here.

It should be noted that the above method of determining the correspondence between TCI states and PDCCH candidates is just explanatory, which is not limited in the embodiments of the disclosure.

Optionally, in a case that the first channel is the PDSCH, fourth indication information of the base station is received, in which the fourth indication information is configured to indicate that H sets of TCI states in the N sets of TCI states indicated by the second indication information are configured to receive the PDSCH, in which H is a positive integer not greater than N, that is, the fourth indication information can further indicate some or all of the TCI states in the N sets of TCI states to receive the PDSCH. The fourth indication information includes at least one of an RRC, a MAC CE, or DCI. After determining that the H sets of TCI states can be configured to receive the PDSCH, a correspondence between the H sets of TCI states and N PDSCH occasions is further determined. It includes determining a correspondence between the H sets of TCI states and PDSCH occasions at different time; or, determining a correspondence between the H sets of TCI states and PDSCH occasions in different frequency domains; or, determining a correspondence between the H sets of TCI states and PDSCH occasions corresponding to DMRS ports of different SDM groups. The way of determining the above correspondence can refer to the following method.
(1) Take a default mapping relationship as the above correspondence. The default mapping relationship can be stored in the terminal in advance, or configured by the access network device to the terminal in advance, or obtained by the terminal according to the fourth indication information. The default mapping relationship includes that a first set of TCI states is applicable to at least one of a PDSCH occasion at a first time, a PDSCH occasion in a first frequency domain, a PDSCH occasion of a first CDM group or a PDSCH occasion in a first time set; a second set of TCI states is applicable to a PDSCH occasion at a second time, a PDSCH occasion in a second frequency domain, a PDSCH occasion of a second CDM group, or a PDSCH occasion in a second time set.

Optionally, in a case that the second channel is the PDSCH, that is, H=1, and a PDSCH reception is based on one set of TCI states, the above method for the case that the first channel is the PDSCH can also be used to indicate which set of TCI states in the N sets of TCI states is configured to receive the second channel, which is not elaborated here.

Optionally, in a case that the first channel is the PUCCH, fifth indication information of the base station is received, in which the fifth indication information is configured to indicate that K sets of TCI states in the N sets of TCI states indicated by the second indication information are configured to receive the PUCCH, in which the K is a positive integer not greater than N, that is, the fifth indication information can further indicate some or all of the TCI states in the N sets of TCI states to receive the PUCCH. The fifth indication information includes at least one of an RRC, a MAC CE, or DCI. After determining that the K sets of TCI states can be configured to receive the PUCCH, a correspondence between the K sets of TCI states and N PUCCH occasions is further determined. It includes determining a correspondence between the K sets of TCI states and PUCCH occasions at different time; or, determining a correspondence between the K sets of TCI states and PUCCH occasions in different frequency domains; or, determining a correspondence between the K sets of TCI states and PUCCH occasions corresponding to DMRS ports of different CDM groups. The way of determining the above correspondence can refer to the following method.
(1) Take a default mapping relationship as the above correspondence. The default mapping relationship can be stored in the terminal in advance, or configured by the access network device to the terminal in advance, or obtained by the terminal according to the fifth indication information. The default mapping relationship includes that a first set of TCI states is applicable to at least one of a PUCCH occasion at a first time, a PUCCH occasion in a first frequency domain, a PUCCH occasion of a first CDM group or a PUCCH occasion in a first time set; a second set of TCI states is applicable to a PUCCH occasion at a second time, a PUCCH occasion in a second frequency domain, a PUCCH occasion of a second CDM group, or a PUCCH occasion in a second time set.

Optionally, in a case that the second channel is the PUCCH, that is, K=1, and a PUCCH transmission is based on one set of TCI states, the above method for the case that the first channel is the PUCCH can also be used to indicate which set of TCI states in the N sets of TCI states is configured to send the second channel, which is not elaborated here.

Optionally, in a case that the first channel is the PUSCH, sixth indication information of the base station is received, in which the sixth indication information is configured to indicate that Q sets of TCI states in the N sets of TCI states indicated by the second indication information are configured to receive the PUSCH, in which the Q is a positive integer not greater than N, that is, the sixth indication information can further indicate some or all of the TCI states in the N sets of TCI states to receive the PUSCH. The sixth indication information includes at least one of an RRC, a MAC CE, or DCI. After determining that the Q sets of TCI states can be configured to receive the PUSCH, a correspondence between the Q sets of TCI states and N PUSCH occasions is further determined. It includes determining a correspondence between the Q sets of TCI states and PUSCH occasions at different time; or, determining a correspondence between the Q sets of TCI states and PUSCH occasions in different frequency domains; or, determining a correspondence between the Q sets of TCI states and PUSCH occasions corresponding to DMRS ports of different CDM groups. The way of determining the above correspondence can refer to the following method.
(1) Take a default mapping relationship as the above correspondence. The default mapping relationship can be stored in the terminal in advance, or configured by the access network device to the terminal in advance, or obtained by the terminal according to the sixth indication information. The default mapping relationship includes that a first set of TCI states is applicable to at least one of a PUSCH occasion at a first time, a PUSCH occasion in a first frequency domain, a PUSCH occasion of a first CDM group or a PUSCH occasion in a first time set; a second set of TCI states is applicable to a PUSCH occasion at a second time, a PUSCH occasion in a second frequency domain, a PUSCH occasion of a second CDM group, or a PUSCH occasion in a second time set.

Optionally, in a case that the second channel is the PUSCH, that is, Q=1, and a PUSCH transmission is based on one set of TCI states, the above method for the case that the first channel is the PUSCH can also be used to indicate which set of TCI states in the N sets of TCI states is configured to send the second channel, which is not elaborated here.

In summary, the TCI state of the terminal is indicated when some channels are configured to transmit based on a plurality of sets of TCI states, and some channels are configured to transmit based on one set of TCI states, so as to improve a signal quality of an M-TRP transmission based on the TCI state.

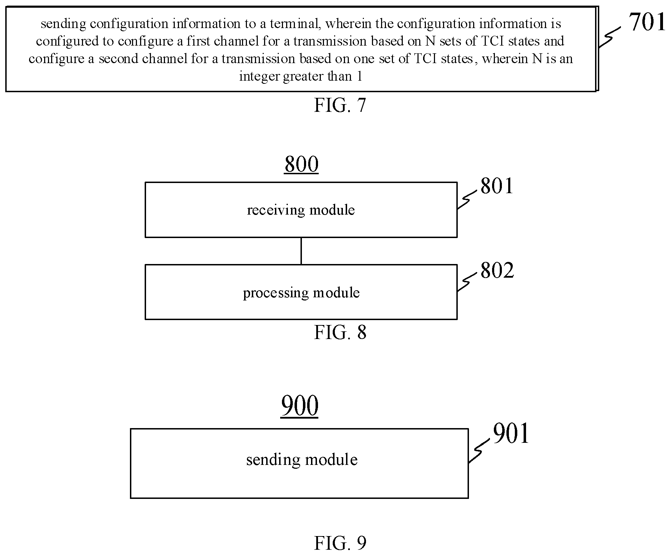

FIG. 7 is a flowchart of a method for indicating a TCI state according to an embodiment of the disclosure. The method can be applied to an access network device in the communication system illustrated in FIG. 1, and include the following steps.

At step 701, configuration information is sent to a terminal, in which the configuration information is configured to configure a first channel for a transmission based on N sets of TCI states and configure a second channel for a transmission based on one set of TCI states, in which N is an integer greater than 1.

The TCI state is configured to inform the terminal to receive the PDCCH/PDSCH by using the same quasi co-location (QCL) information or spatial Rx parameter as receiving which reference signal sent by the base station; or, inform the terminal to send the PUCCH/PUSCH by using the same QCL information or spatial relation information or spatial filter as sending which reference signal.

The first channel includes at least one of a PDCCH, a PDSCH, a PUCCH, or a PUSCH.

The second channel includes at least one of a PDCCH, a PDSCH, a PUCCH, or a PUSCH.

The first channel and the second channel may be the same channel or different channels. For example, the first channel is a PDCCH and the second channel is a PDSCH or a PUCCH or a PUSCH. For another example, the first channel and the second channel are both the PDCCH, or, the first channel and the second channel are both the PDSCH.

For example, the first channel and the second channel are both the PDCCH, but the CORESET corresponding to the first channel is different from the CORESET corresponding to the second channel, or, the SS set corresponding to the first channel is different from the SS set corresponding to the second channel. There can be one or more CORESETs corresponding to the first channel or the second channel, and there can be one or more SS sets corresponding to the first channel or the second channel.

For example, the first channel and second channel are both the PUSCH, while configuration of the first channel is a dynamic grant and configuration of the second channel is a configured grant Type 1 or a configured grant Type 2.

For example, the first channel and the second channel are both the PUCCH, and the first channel is configured with a plurality of sets of TCI states, in which the plurality of sets of TCI states correspond to a multi transmission reception point (M-TRP) transmission; the second channel is configured with one set of TCI states, in which the one set of TCI states corresponds to an S-TRP transmission.

For example, the first channel and the second channel are both the PDSCH, and the DCI corresponding to the first channel belongs to a first CORESET and a first SS set. The DCI corresponding to the second channel belongs to a second CORESET and a second SS set. The first CORESET and the second CORESET can be the same or different, and the first SS set and the second SS set can be the same or different.

The first channel is configured for a transmission based on N sets of TCI states in at least one transmission. That is, not every transmission in the first channel is the transmission based on a plurality of TCI states, as long as there is one transmission based on N sets of TCI states.

A single set of TCI states includes a joint TCI state, and the joint TCI state is a TCI state applicable to both a transmission of an uplink channel/reference signal and a transmission of a downlink channel/reference signal; or a single set of TCI states includes at least one of an uplink TCI state or a downlink TCI state. The uplink TCI state indicates the transmission of an uplink channel/reference signal, and the downlink TCI states indicates the transmission of a downlink channel/reference signal.

Optionally, the terminal receives first indication information, in which the first indication information is configured to indicate M sets of TCI states; the terminal determines at least one set of TCI states corresponding to at least one channel transmission from the M sets of TCI states based on the first indication information, in which M is a positive integer not greater than N. In this case, the number of TCI states indicated by the first indication information can be 1 to N.

Optionally, the first indication information includes a second MAC CE and DCI. For example, the MAC CE activates M sets of TCI states corresponding to each of a plurality of codepoints in a TCI field in DCI, and the TCI field of the DCI indicates one of the codepoints.

Optionally, channels corresponding to the at least one channel transmission include the first channel and the second channel.

Optionally, the one set of TCI states includes a joint TCI state or the one set of TCI states includes a downlink TCI state or includes a downlink TCI state and an uplink TCI state, in a case that the first channel is the PDCCH and M is equal to one.

Optionally, a first PDCCH candidate or a second PDCCH candidate contained in the PDCCH is monitored based on the joint TCI state in the one set of TCI states; or a first PDCCH candidate or a second PDCCH candidate contained in the PDCCH is monitored based on the downlink TCI state in the one set of TCI states. The first PDCCH candidate corresponds to a first SS set, the second PDCCH candidate corresponds to a second SS set, and the first SS set and the second SS set are SS sets with a link relationship. The first SS set is associated with a first CORESET, and the second SS set is associated with a second CORESET. The first CORESET and the second CORESET can be the same or different.

For example, one PDCCH candidate of the first PDCCH candidate and the second PDCCH candidate contained in the PDCCH monitored based on the joint TCI state in the one set of TCI states is configured as a target PDCCH candidate, such as the first PDCCH candidate. That is, the PDCCH on the first PDCCH candidate is received using the one set of TCI states, and the PDCCH on the second PDCCH candidate does not need to be monitored and received. The way that the terminal determines the target PDCCH candidate corresponding to the one set of TCI states includes the following methods.

First one, the base station informs the terminal of a correspondence between PDCCH candidates and TCI states.

Optionally, the terminal receives second configuration information, in which the second configuration information indicates a correspondence between each TCI state and the target PDCCH candidate.

For example, the base station configures an SS set group corresponding to an SS set, or the base station configures a CORESETPoolIndex, a CORESET group, or a channel group corresponding to a CORESET. The base station further indicates an SS set group or a CORESETPoolIndex or a CORESET group or a channel group corresponding to each TCI state, then the correspondence between PDCCH candidates and TCI states can be determined according to the correspondence between the configuration of the base station and the information indicated by the base station. The above configuration can be configured by at least one of an RRC, a MAC CE, or DCI. The above indication can be indicated by at least one of an RRC, a MAC CE, or DCI.

Second one, the target PDCCH candidate can be determined according to a default mapping rule.

Optionally, the terminal determines a target PDCCH candidate corresponding to one set of TCI states from two PDCCH candidates based on the default mapping relationship. The way to determine the target PDCCH candidate according to the default mapping rule includes at least one of the following methods.
1) The target PDCCH candidate is the PDCCH candidate corresponding to a smallest or smaller CORESET identity document (ID) in N PDCCH candidates. That is, the target PDCCH candidate is the PDCCH candidate corresponding to the smallest or smaller CORESET ID in the N PDCCH candidates.
2) The target PDCCH candidate is a PDCCH candidate corresponding to a smallest or smaller SS set ID in N PDCCH candidates. That is, the target PDCCH candidate is the PDCCH candidate corresponding to a smallest or smaller SS set ID in the N PDCCH candidates.
3) The target PDCCH candidate is a PDCCH candidate corresponding to a CORESET with a smallest or smaller CORESETPoolIndex in N PDCCH candidates.
4) The target PDCCH candidate is a PDCCH candidate corresponding to a CORESET with a smallest or smaller CORESET group ID in N PDCCH candidates.

It should be noted that the above methods of determining the target PDCCH candidate are just explanatory, which are not limited in the embodiments of the disclosure.

For example, the first PDCCH candidate and the second PDCCH candidate contained in the PDCCH are monitored based on the joint TCI state in one set of TCI states. That is, the one set of TCI states is used to receive PDCCHs on the first PDCCH candidate and the second PDCCH candidate.

Optionally, the terminal receives second indication information, in which the second indication information is configured to indicate N sets of TCI states; the terminal determines at least one set of TCI states corresponding to at least one channel transmission from the N sets of TCI states based on the second indication information.

Optionally, a correspondence between N sets of TCI states and N PDCCH candidates is determined if the first channel is the PDCCH. The way to determine a correspondence between the N sets of TCI states and the N PDCCH candidates can refer to the following method: receiving third indication information of the base station, in which the third indication information is configured to indicate that L sets of the N sets of TCI states indicated by the second indication information are configured to receive the PDCCH, in which L is a positive integer not greater than N. That is, the third indication information can further indicate that some or all of TCI states in the N sets of TCI states are configured to receive the PDCCH. The third indication information contains at least one of an RRC, a MAC CE, and DCI. After determining that L sets of TCI states can be configured to receive the PDCCH, the correspondence between the L sets of TCI states and the N PDCCH candidates is further determined. If L=N, the correspondence between TCI states and PDCCH candidates is determined based on at least one of the following methods.

First one, the base station informs the terminal of a correspondence between PDCCH candidates and TCI states.

Optionally, the terminal receives third configuration information, in which the third configuration information indicates a correspondence between each TCI state and the target PDCCH candidate.

For example, the base station configures an SS set group corresponding to an SS set, or the base station configures a CORESETPoolIndex, a CORESET group, or a channel group corresponding to a CORESET. The base station further indicates an SS set group or a CORESETPoolIndex or a CORESET group or a channel group corresponding to each TCI state, then the correspondence between PDCCH candidates and TCI states can be determined according to the correspondence between the configuration of the base station and the information indicated by the base station. The above configuration can be configured by at least one of an RRC, a MAC CE, or DCI. The above indication can be indicated by at least one of an RRC, a MAC CE, or DCI.

Second one, a correspondence between PDCCH candidates and TCI states can be determined according to a default mapping rule.

Optionally, the terminal determines the correspondence between PDCCH candidates and TCI states based on a default mapping relationship. The default mapping relationship can be stored in the terminal in advance, or configured by the access network device to the terminal in advance, or obtained by the terminal according to the third indication information. The way to determine the correspondence between PDCCH candidates and TCI states according to the default mapping rule includes at least one of the following methods.
1) The PDCCH candidate corresponding to a smallest CORESET ID in PDCCH candidates corresponds to a first set of TCI states, in which the first set of TCI state is a TCI state with a smallest TCI state ID, or a TCI state in a lower bit position of a MAC CE configured to activate a plurality of sets of TCI states corresponding to a codepoint. The others correspond in order.
2) The PDCCH candidate corresponding to a smallest SS set ID in PDCCH candidates corresponds to a first set of TCI states, in which the first set of TCI states is a TCI state with a smallest TCI state ID, or a TCI state in a lower bit position of a MAC CE configured to activate a plurality of sets of TCI states corresponding to a codepoint. The others correspond in sequence.
3) The PDCCH candidate corresponding to a CORESET with a smallest CORESETPoolIndex in PDCCH candidates corresponds to a first set of TCI states, in which the first set of TCI states is a TCI state with a smallest TCI state ID, or a TCI state in a lower bit position of an MAC CE configured to activate a plurality of sets of TCI states corresponding to a codepoint. The others correspond in sequence.
4) The PDCCH candidate corresponding to a CORESET with a smallest CORESET group ID in PDCCH candidates corresponds to a first set of TCI states, in which the first set of TCI states is a TCI state with a smallest TCI state ID, or a TCI state in a lower bit position of an MAC CE configured to activate a plurality of sets of TCI states corresponding to a codepoint. The others correspond in sequence.

If L=1, one method is to apply a set of TCI states to all PDCCH candidates. The other is to apply a set of TCI states to a target PDCCH candidate in the N PDCCH candidates, in which the target PDCCH candidate can also be determined according to the above configuration of the base station or the default mapping rule.

Optionally, in a case that the second channel is the PDCCH, that is, L=1, and the PDCCH reception contains only one PDCCH candidate, the above method for the case that the first channel is the PDCCH can also be used to indicate which set of TCI states in the N sets of TCI states is configured to receive the second channel, which is not elaborated here.

It should be noted that the above method of determining the correspondence between TCI states and PDCCH candidates is just explanatory, which is not limited in the embodiments of the disclosure.

Optionally, in a case that the first channel is the PDSCH, fourth indication information of the base station is received, in which the fourth indication information is configured to indicate that H sets of TCI states in the N sets of TCI states indicated by the second indication information are configured to receive the PDSCH, in which H is a positive integer not greater than N, that is, the fourth indication information can further indicate some or all of the TCI states in the N sets of TCI states to receive the PDSCH. The fourth indication information includes at least one of an RRC, a MAC CE, or DCI. After determining that the H sets of TCI states can be configured to receive the PDSCH, a correspondence between the H sets of TCI states and N PDSCH occasions is further determined. It includes determining a correspondence between the H sets of TCI states and PDSCH occasions at different time; or, determining a correspondence between the H sets of TCI states and PDSCH occasions in different frequency domains; or, determining a correspondence between the H sets of TCI states and PDSCH occasions corresponding to DMRS ports of different SDM groups. The way of determining the above correspondence can refer to the following method.
(1) Take a default mapping relationship as the above correspondence. The default mapping relationship can be stored in the terminal in advance, or configured by the access network device to the terminal in advance, or obtained by the terminal according to the fourth indication information. The default mapping relationship includes that a first set of TCI states is applicable to at least one of a PDSCH occasion at a first time, a PDSCH occasion in a first frequency domain, a PDSCH occasion of a first CDM group or a PDSCH occasion in a first time set; a second set of TCI states is applicable to a PDSCH occasion at a second time, a PDSCH occasion in a second frequency domain, a PDSCH occasion of a second CDM group, or a PDSCH occasion in a second time set.

Optionally, in a case that the second channel is the PDSCH, that is, H=1, and a PDSCH reception is based on one set of TCI states, the above method for the case that the first channel is the PDSCH can also be used to indicate which set of TCI states in the N sets of TCI states is configured to receive the second channel, which is not elaborated here.

Optionally, in a case that the first channel is the PUCCH, fifth indication information of the base station is received, in which the fifth indication information is configured to indicate that K sets of TCI states in the N sets of TCI states indicated by the second indication information are configured to receive the PUCCH, in which the K is a positive integer not greater than N, that is, the fifth indication information can further indicate some or all of the TCI states in the N sets of TCI states to receive the PUCCH. The fifth indication information includes at least one of an RRC, a MAC CE, or DCI. After determining that the K sets of TCI states can be configured to receive the PUCCH, a correspondence between the K sets of TCI states and N PUCCH occasions is further determined. It includes determining a correspondence between the K sets of TCI states and PUCCH occasions at different time; or, determining a correspondence between the K sets of TCI states and PUCCH occasions in different frequency domains; or, determining a correspondence between the K sets of TCI states and PUCCH occasions corresponding to DMRS ports of different CDM groups. The way of determining the above correspondence can refer to the following method.
(1) Take a default mapping relationship as the above correspondence. The default mapping relationship can be stored in the terminal in advance, or configured by the access network device to the terminal in advance, or obtained by the terminal according to the fifth indication information. The default mapping relationship includes that a first set of TCI states is applicable to at least one of a PUCCH occasion at a first time, a PUCCH occasion in a first frequency domain, a PUCCH occasion of a first CDM group or a PUCCH occasion in a first time set; a second set of TCI states is applicable to a PUCCH occasion at a second time, a PUCCH occasion in a second frequency domain, a PUCCH occasion of a second CDM group, or a PUCCH occasion in a second time set.

Optionally, in a case that the second channel is the PUCCH, that is, K=1, and a PUCCH transmission is based on one set of TCI states, the above method for the case that the first channel is the PUCCH can also be used to indicate which set of TCI states in the N sets of TCI states is configured to send the second channel, which is not elaborated here.

Optionally, in a case that the first channel is the PUSCH, sixth indication information of the base station is received, in which the sixth indication information is configured to indicate that Q sets of TCI states in the N sets of TCI states indicated by the second indication information are configured to receive the PUSCH, in which the Q is a positive integer not greater than N, that is, the sixth indication information can further indicate some or all of the TCI states in the N sets of TCI states to receive the PUSCH. The sixth indication information includes at least one of an RRC, a MAC CE, or DCI. After determining that the Q sets of TCI states can be configured to receive the PUSCH, a correspondence between the Q sets of TCI states and N PUSCH occasions is further determined. It includes determining a correspondence between the Q sets of TCI states and PUSCH occasions at different time; or, determining a correspondence between the Q sets of TCI states and PUSCH occasions in different frequency domains; or, determining a correspondence between the Q sets of TCI states and PUSCH occasions corresponding to DMRS ports of different CDM groups. The way of determining the above correspondence can refer to the following method.
(1) Take a default mapping relationship as the above correspondence. The default mapping relationship can be stored in the terminal in advance, or configured by the access network device to the terminal in advance, or obtained by the terminal according to the sixth indication information. The default mapping relationship includes that a first set of TCI states is applicable to at least one of a PUSCH occasion at a first time, a PUSCH occasion in a first frequency domain, a PUSCH occasion of a first CDM group or a PUSCH occasion in a first time set; a second set of TCI states is applicable to a PUSCH occasion at a second time, a PUSCH occasion in a second frequency domain, a PUSCH occasion of a second CDM group, or a PUSCH occasion in a second time set.

Optionally, in a case that the second channel is the PUSCH, that is, Q=1, and a PUSCH transmission is based on one set of TCI states, the above method for the case that the first channel is the PUSCH can also be used to indicate which set of TCI states in the N sets of TCI states is configured to send the second channel, which is not elaborated here.

In summary, the TCI state of the terminal is indicated when some channels are configured to transmit based on a plurality of sets of TCI states, and some channels are configured to transmit based on one set of TCI states, so as to improve a signal quality of an M-TRP transmission based on the TCI state.

FIG. 8 is a block diagram of an apparatus for indicating a TCI state according to an embodiment of the disclosure. As illustrated in FIG. 8, the apparatus includes a receiving module 801 and a processing module 802. The receiving module 801 is configured to receive configuration information, in which the configuration information is configured to configure a first channel for a transmission based on N sets of TCI states and configure a second channel for a transmission based on one set of TCI states, in which N is an integer greater than 1.

In an optional design, the first channel includes at least one of a PDCCH, a PDSCH, a PUCCH, or a PUSCH.

In an optional design, the second channel includes at least one of a PDCCH, a PDSCH, a PUCCH, or a PUSCH.

In an optional design, the first channel is configured for the transmission based on the N sets of TCI states in at least one transmission process.

In an optional design, a single set of TCI states includes a joint TCI state, and the joint TCI state is a TCI state indicating both an uplink channel/reference signal and a downlink channel/reference signal; or a single set of TCI states includes at least one of an uplink TCI state or a downlink TCI state.

In an optional design, the receiving module 801 is further configured to receive first indication information, in which the first indication information is configured to indicate M sets of TCI states, in which M is a positive integer not greater than N; and the processing module 802 is configured to determine at least one set of TCI states corresponding to at least one channel transmission from the M sets of TCI states based on the first indication information, in which a channel corresponding to the at least one channel transmission includes the first channel and the second channel.

In an optional design, the first indication information includes a first MAC CE; or the first indication information includes a second MAC CE and first DCI.

In an optional design, at least one set of TCI states in the M sets of TCI states includes at least one of an uplink TCI state or a downlink TCI state in a case that the first channel is a downlink channel and the second channel is an uplink channel or the first channel is an uplink channel and the second channel is a downlink channel.

In an optional design, the one set of TCI states includes a joint TCI state or the one set of TCI states includes a downlink TCI state or includes a downlink TCI state and an uplink TCI state, in a case that the first channel is a PDCCH and M is equal to one.

In an optional design, a first PDCCH candidate or a second PDCCH candidate contained in the PDCCH is monitored based on the joint TCI state in the one set of TCI states; or a first PDCCH candidate or a second PDCCH candidate contained in the PDCCH is monitored based on the downlink TCI state in the one set of TCI states.

In an optional design, the first PDCCH candidate corresponds to a first SS set, the second PDCCH candidate corresponds to a second SS set, and the first SS set and the second SS set are SS sets with a link relationship, in which the first SS set is associated with a first CORESET, and the second SS set is associated with a second CORESET.

In an optional design, the receiving module 801 is configured to receive second indication information, in which the second indication information is configured to indicate N sets of TCI states; and the processing module 802 is configured to determine at least one set of TCI states corresponding to at least one channel transmission from the N sets of TCI states based on the second indication information, in which a channel corresponding to the at least one channel transmission includes the first channel and the second channel.

In summary, the TCI state of the terminal is indicated when some channels are configured to transmit based on a plurality of sets of TCI states, and some channels are configured to transmit based on one set of TCI states, so as to improve a signal quality of an M-TRP transmission based on the TCI state.

FIG. 9 is a block diagram of an apparatus for indicating a TCI state according to an embodiment of the disclosure. As illustrated in FIG. 9, the apparatus includes a sending module 901, configured to send configuration information to a terminal, in which the configuration information is configured to configure a first channel for a transmission based on N sets of TCI states and configure a second channel for a transmission based on one set of TCI states, in which N is an integer greater than 1.

In an optional design, the first channel includes at least one of a PDCCH, a PDSCH, a PUCCH, or a PUSCH.

In an optional design, the second channel includes at least one of a PDCCH, a PDSCH, a PUCCH, or a PUSCH.

In an optional design, the first channel is configured for the transmission based on the N sets of TCI states in at least one transmission process.

In an optional design, a single set of TCI states includes a joint TCI state, and the joint TCI state is a TCI state applicable to both an uplink channel/reference signal and a downlink channel/reference signal; or a single set of TCI states includes at least one of an uplink TCI state or a downlink TCI state.

In an optional design, the sending module 901 is further configured to send first indication information to the terminal, in which the first indication information is configured to indicate M sets of TCI states, and the first indication information is used for the terminal to determine at least one set of TCI states corresponding to at least one channel transmission, and a channel corresponding to the at least one channel transmission includes the first channel and the second channel, in which M is a positive integer not greater than N.

In an optional design, the first indication information includes a first MAC CE; or the first indication information includes a second MAC CE and first DCI.

In an optional design, at least one set of TCI states in the M sets of TCI states includes at least one of an uplink TCI state or a downlink TCI state in a case that the first channel is a downlink channel and the second channel is an uplink channel or the first channel is an uplink channel and the second channel is a downlink channel.

In an optional design, the one set of TCI states includes a joint TCI state or the one set of TCI states includes a downlink TCI state or includes a downlink TCI state and an uplink TCI state, in a case that the first channel is a PDCCH and M is equal to one.

In an optional design, a first PDCCH candidate or a second PDCCH candidate contained in the PDCCH is monitored based on the joint TCI state in the one set of TCI states; or a first PDCCH candidate or a second PDCCH candidate contained in the PDCCH is monitored based on the downlink TCI state in the one set of TCI states.

In an optional design, the first PDCCH candidate corresponds to a first SS set, the second PDCCH candidate corresponds to a second SS set, and the first SS set and the second SS set are SS sets with a link relationship, in which the first SS set is associated with a first CORESET, and the second SS set is associated with a second CORESET.

In an optional design, the sending module 901 is configured to send second indication information to the terminal, in which the second indication information is configured to indicate N sets of TCI states, and the second indication information is further used for the terminal to determine at least one set of TCI states corresponding to at least one channel transmission from the N sets of TCI states, and a channel corresponding to the at least one channel transmission includes the first channel and the second channel.

In summary, the TCI state of the terminal is indicated when some channels are configured to transmit based on a plurality of sets of TCI states, and some channels are configured to transmit based on one set of TCI states, so as to improve a signal quality of an M-TRP transmission based on the TCI state.

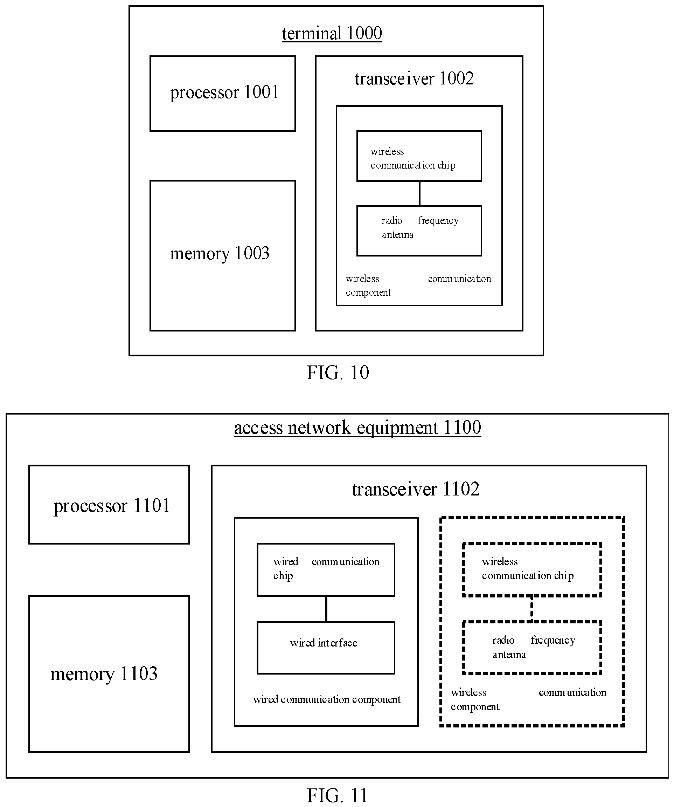

FIG. 10 is a structural diagram of a terminal 1000 according to an embodiment of the disclosure. The terminal 1000 includes a processor 1001; a transceiver 1002 connected to the processor; and a memory 1003. The processor 1001 includes one or more processing cores. The processor 1001 executes various functional applications and information processing by running software programs and modules. The transceiver 1002 may include a receiver and a transmitter, for example, the receiver and the transmitter may be the same wireless communication component, and the wireless communication component may include a wireless communication chip and a radio frequency antenna. The memory 1003 can be connected to the processor 1001 and the transceiver 1002. The memory 1003 may be configured to store a computer program executed by a processor, and the processor 1001 is configured to execute the computer program to implement various steps executed by the terminal in the wireless communication system in the above method embodiments. In addition, the memory 1003 may be implemented by any type of volatile or non-volatile storage device, or a combination thereof, including, but not limited to: a disk or an optical disc, an electrically-erasable programmable read-only memory, an erasable programmable read-only memory, a static random-access memory, a read-only memory, a magnetic memory, a flash memory, a programmable read-only memory. The process performed by the transceiver 1002 can refer to the steps performed by the terminal in the above method.

FIG. 11 is a structural diagram of a network device according to an embodiment of the disclosure. The network device 1100 may include a processor 1101, a transceiver 1102, and a memory 1103. The processor 1101 includes one or more processing cores. The processor 1101 executes various functional applications and information processing by running software programs and modules. The transceiver 1102 may include a receiver and a transmitter. For example, the transceiver 1102 may include a wired communication component, which may include a wired communication chip and a wired interface (such as a fiber interface). Optionally, the transceiver 1102 may also include a wireless communication component, in which the wireless communication component may include a wireless communication chip and a radio frequency antenna. The memory 1103 can be connected to a processor 1101 and a transceiver 1102. The memory 1103 may be configured to store a computer program executed by a processor, and the processor 1101 may execute the computer program to implement various steps executed by the terminal in a wireless communication system in the above method embodiments. In addition, the memory 1103 may be implemented by any type of volatile or non-volatile storage device, or a combination thereof, including, but not limited to: a disk or an optical disc, an electrically-erasable programmable read-only memory, an erasable programmable read-only memory, a static random-access memory, a read-only memory, a magnetic memory, a flash memory, a programmable read-only memory.

The embodiments of the present disclosure also provide a computer-readable storage medium for storing a computer program, in which the computer program is loaded and executed by a processor to implement the steps executed by a terminal or an access network device in the above method.

The embodiments of the present disclosure also provide a computer program product including computer instructions, in which the computer instructions are stored in a computer-readable storage medium. The computer instructions are read by a processor of a computer from the computer-readable storage medium and executed by the processor, so the computer is caused to perform the steps executed by a terminal or an access network device in the above method.

The embodiments of the present disclosure also provide a chip for operating in a computer, so the computer is caused to perform the steps executed by a terminal or an access network device in the above method.

The embodiments of the present disclosure also provide a computer program executed by a processor of a computer, so the computer is caused to perform the steps executed by a terminal or an access network device in the above method.

It should be understood by those skilled in the art, in the above one or more embodiments that each part of the present disclosure may be realized by the hardware, software, firmware or their combination. When it is realized by the hardware, these functions can be stored in computer-readable media or transmitted as one or more instructions or code on computer-readable media. A computer-readable medium includes a computer storage medium and a communication medium, in which the communication medium includes any medium facilitating the transmission of a computer program from one place to another. The storage medium may be a usable medium accessible to a general-purpose or special-purpose computer.

It should be understood that above embodiments of the disclosure are just explanatory, and cannot be construed to limit the present disclosure. Any modification, equivalent replacement, improvement, etc. made within the spirit and principles of the present disclosure shall be included in the scope of protection of the present disclosure.

## Claims

1. A method for indicating a transmission configuration indication (TCI) state, executed by a terminal, and comprising:
receiving configuration information, wherein the configuration information is configured to configure a first channel for a transmission based on N sets of TCI states and configure a second channel for a transmission based on one set of TCI states, wherein N is an integer greater than 1.

2. The method according to claim 1, wherein
the first channel comprises at least one of a physical downlink control channel (PDCCH), a physical downlink shared channel (PDSCH), a physical uplink control channel (PUCCH), or a physical uplink shared channel (PUSCH).

3. The method according to claim 1, wherein
the second channel comprises at least one of a physical downlink control channel (PDCCH), a physical downlink shared channel (PDSCH), a physical uplink control channel (PUCCH), or a physical uplink shared channel (PUSCH).

4. The method according to claim 1, wherein
the first channel is configured for the transmission based on the N sets of TCI states in at least one transmission process.

5. The method according to claim 1, wherein
a single set of TCI states comprises a joint TCI state, and the joint TCI state is a TCI state applicable to both an uplink channel/reference signal and a downlink channel/reference signal; or
a single set of TCI states comprises at least one of an uplink TCI state or a downlink TCI state.

6. The method according to any one of claims 1 to 5, further comprising:
receiving first indication information, wherein the first indication information is configured to indicate M sets of TCI states, wherein M is a positive integer not greater than N; and
determining at least one set of TCI states corresponding to at least one channel transmission from the M sets of TCI states based on the first indication information, wherein a channel corresponding to the at least one channel transmission comprises the first channel and the second channel.

7. The method according to claim 6, wherein
the first indication information comprises a first medium access control control unit (MAC CE); or
the first indication information comprises a second MAC CE and first downlink control information (DCI).

8. The method according to claim 6, wherein
at least one set of TCI states in the M sets of TCI states comprises at least one of an uplink TCI state or a downlink TCI state in a case that the first channel is a downlink channel and the second channel is an uplink channel or the first channel is an uplink channel and the second channel is a downlink channel.

9. The method according to claim 6, wherein
the one set of TCI states comprises a joint TCI state or the one set of TCI states comprises a downlink TCI state or comprises a downlink TCI state and an uplink TCI state, in a case that the first channel is a PDCCH and M is equal to one.

10. The method according to claim 9, further comprising:
monitoring a first PDCCH candidate or a second PDCCH candidate contained in the PDCCH based on the joint TCI state in the one set of TCI states; or
monitoring a first PDCCH candidate or a second PDCCH candidate contained in the PDCCH based on the downlink TCI state in the one set of TCI states.

11. The method according to claim 10, wherein
the first PDCCH candidate corresponds to a first search space (SS) set, the second PDCCH candidate corresponds to a second SS set, and the first SS set and the second SS set are SS sets with a link relationship, wherein the first SS set is associated with a first control resource set (CORESET), and the second SS set is associated with a second CORESET.

12. The method according to any one of claims 1 to 5, further comprising:
receiving second indication information, wherein the second indication information is configured to indicate N sets of TCI states; and
determining at least one set of TCI states corresponding to at least one channel transmission from the N sets of TCI states based on the second indication information, wherein a channel corresponding to the at least one channel transmission comprises the first channel and the second channel.

13. A method for indicating a transmission configuration indication (TCI) state, executed by an access network device, and comprising:
sending configuration information to a terminal, wherein the configuration information is configured to configure a first channel for a transmission based on N sets of TCI states and configure a second channel for a transmission based on one set of TCI states, wherein N is an integer greater than 1.

14. The method according to claim 13, wherein
the first channel comprises at least one of a physical downlink control channel (PDCCH), a physical downlink shared channel (PDSCH), a physical uplink control channel (PUCCH), or a physical uplink shared channel (PUSCH).

15. The method according to claim 13, wherein
the second channel comprises at least one of a physical downlink control channel (PDCCH), a physical downlink shared channel (PDSCH), a physical uplink control channel (PUCCH), or a physical uplink shared channel (PUSCH).

16. The method according to claim 13, wherein
the first channel is configured for the transmission based on the N sets of TCI states in at least one transmission process.

17. The method according to claim 13, wherein
a single set of TCI states comprises a joint TCI state, and the joint TCI state is a TCI state applicable to both an uplink channel/reference signal and a downlink channel/reference signal; or
a single set of TCI states comprises at least one of an uplink TCI state or a downlink TCI state.

18. The method according to any one of claims 13 to 17, further comprising:
sending first indication information to a terminal, wherein the first indication information is configured to indicate M sets of TCI states, and the first indication information is used for the terminal to determine at least one set of TCI states corresponding to at least one channel transmission, and a channel corresponding to the at least one channel transmission comprises the first channel and the second channel, wherein M is a positive integer not greater than N.

19. The method according to claim 18, wherein
the first indication information comprises a first medium access control control unit (MAC CE); or
the first indication information comprises a second MAC CE and first downlink control information (DCI).

20. The method according to claim 18, wherein
at least one set of TCI states in the M sets of TCI states comprises at least one of an uplink TCI state or a downlink TCI state in a case that the first channel is a downlink channel and the second channel is an uplink channel or the first channel is an uplink channel and the second channel is a downlink channel.

21. The method according to claim 18, wherein
the one set of TCI states comprises a joint TCI state or the one set of TCI states comprises a downlink TCI state or comprises a downlink TCI state and an uplink TCI state, in a case that the first channel is a PDCCH and M is equal to one.

22. The method according to claim 21, wherein
the joint TCI state in the one set of TCI state is configured to monitor a first PDCCH candidate or a second PDCCH candidate contained in the PDCCH by the terminal; and
the downlink TCI state in the one set of TCI state is configured to monitor a first PDCCH candidate or a second PDCCH candidate contained in the PDCCH by the terminal.

23. The method according to claim 22, wherein
the first PDCCH candidate corresponds to a first search space (SS) set, the second PDCCH candidate corresponds to a second SS set, and the first SS set and the second SS set are SS sets with a link relationship, wherein the first SS set is associated with a first control resource set (CORESET), and the second SS set is associated with a second CORESET.

24. The method according to any one of claims 13 to 17, further comprising:
sending second indication information to a terminal, wherein the second indication information is configured to indicate N sets of TCI states, and the second indication information is further used for the terminal to determine at least one set of TCI states corresponding to at least one channel transmission from the N sets of TCI states, and a channel corresponding to the at least one channel transmission comprises the first channel and the second channel.

25. An apparatus for indicating a transmission configuration indication (TCI) state, comprising:
a first receiving module, configured to receive configuration information, wherein the configuration information is configured to configure a first channel for a transmission based on N sets of TCI states and configure a second channel for a transmission based on one set of TCI states, wherein N is an integer greater than 1.

26. An apparatus for indicating a transmission configuration indication (TCI) state, comprising:
a first sending module, configured to send configuration information to a terminal, wherein the configuration information is configured to configure a first channel for a transmission based on N sets of TCI states and configure a second channel for a transmission based on one set of TCI states, wherein N is an integer greater than 1.

27. A terminal, comprising:
a processor; and
a transceiver connected to the processor,
wherein the processor is configured to load and execute executable instructions to implement a method for indicating a transmission configuration indication (TCI) state according to any one of claims 1 to 15.

28. A computer-readable storage medium, storing at least one instruction, at least one program, a code set or an instruction set, wherein the at least one instruction, the at least one program, the code set or the instruction set is loaded and executed by the processor to implement a method for indicating a transmission configuration indication (TCI) state according to any one of claims 1 to 12, or, to implement a method for indicating a TCI state according to any one of claims 13 to 24.
